# EUROPÄISCHE PATENTANMELDUNG

(11) **EP 4 628 364 A1**
(43) Veröffentlichungstag der Anmeldung: **08.10.2025**
(21) Anmeldenummer: 25162506.7
(22) Anmeldetag: 10.03.2025
(51) Int. Cl.: B60R 1/24, B60R 1/26, B60R 3/00

(54) **NUTZFAHRZEUG**

(30) Priorität: 15.03.2024 DE 102024107483
(71) Anmelder: FAUN Umwelttechnik GmbH & Co. KG, 27711 Osterholz-Scharmbeck (DE)
(72) Erfinder: Knüfermann, Peter, 46483 Wesel (DE); Sonnenburg, Malte, 58636 Iserlohn (DE)
(74) Vertreter: Regler, Markus Egid

(57) **Zusammenfassung**

Die Erfindung betrifft ein Nutzfahrzeug (1) mit zumindest einer Standfläche für mitfahrendes Bedienpersonal, mit einer ersten Kamera, die einen Bereich (2) in Fahrtrichtung vor dem Fahrzeug erfasst, und mit einer zweiten Kamera, die einen Bereich (3) in Fahrtrichtung hinter dem Fahrzeug (1) erfasst, wobei im Bereich der Standfläche zumindest ein Anzeigegerät angeordnet ist, auf dem abhängig von dem Betriebsmodus des Nutzfahrzeugs (1) Bildinformationen zumindest einer Kamera darstellbar sind.

Dadurch wird die Sicherheit des Bedienpersonals stark erhöht, da die Wahrnehmung der Nutzfahrzeugumgebung durch das Personal verbessert wird,

## Beschreibung

Die Erfindung betrifft ein Nutzfahrzeug mit den Merkmalen des Patentanspruchs 1.

Nutzfahrzeuge, beispielsweise Abfallsammelfahrzeuge oder Straßenkehrmaschinen, sind häufig mit Standflächen ausgerüstet, auf denen das Bedienpersonal währen der Fahrt mitfahren kann. Das sind oftmals Trittbretter, die heckseitig an den Fahrzeugen angeordnet sind und von einer Ruhestellung in eine betretbare Stellung bewegt werden können.

Das Bedienpersonal eines Abfallsammelfahrzeugs beispielsweise fährt auf der Strecke von einem Abfallbehälter zum nächsten auf einem Trittbrett mit. Die dabei zurückgelegte Distanz kann von einigen wenigen bis zu einigen hundert Metern variieren. Während der Fahrt ist die Sicht des Bedienpersonals nach vorne eingeschränkt, so dass es den herrschenden Verkehr nicht wahrnehmen kann. Überraschendes Steuerverhalten des Fahrers, der auf plötzlich auftretende Verkehrssituationen reagiert, kann von dem Bedienpersonal nicht vorhergesehen werden. Es besteht daher die Gefahr, dass die Personen den Halt verlieren und während der Fahrt zu Boden stürzen. Aber auch grundsätzlich ist die Mitfahrt auf dem Trittbrett komfortabler, wenn sich die Person auf das Steuerverhalten des Fahrers einstellen kann und nicht auf unvermittelt auftretende Kräfte reagieren muss.

Auch nach hinten kann das Bedienpersonal den Verkehr nur sehr eingeschränkt wahrnehmen. Beim Absteigen vom Trittbrett kommt es häufig zu gefährlichen Situationen, weil andere Autofahrer den gebotenen Sicherheitsabstand unterschreiten und vom Anhalten des Fahrzeugs überrascht werden.

Es ist die Aufgabe der vorliegenden Erfindung die Sicherheit des Bedienpersonals von Nutzfahrzeugen zu verbessern.

Diese Aufgabe wird gelöst durch ein Nutzfahrzeug mit den Merkmalen des Anspruchs 1, besondere Ausgestaltungen der Erfindung sind Gegenstand der abhängigen Ansprüche.

Die Erfindung betrifft ein Nutzfahrzeug mit zumindest einer Standfläche für mitfahrendes Bedienpersonal, mit einer ersten Kamera, die einen Bereich in Fahrtrichtung vor dem Fahrzeug erfasst, und mit einer zweiten Kamera, die einen Bereich in Fahrtrichtung hinter dem Fahrzeug erfasst, wobei im Bereich der Standfläche zumindest ein Anzeigegerät angeordnet ist, auf dem abhängig von dem Betriebsmodus des Nutzfahrzeugs Bildinformationen zumindest einer Kamera darstellbar sind.

Zu Nutzfahrzeugen sind insbesondere Abfallsammelfahrzeuge oder Straßenkehrmaschinen zu zählen. Bei der Standfläche kann es sich insbesondere um ein Trittbrett handeln, das feststehend oder klappbar an dem Nutzfahrzeug angeordnet ist.

Das Anzeigegerät ist vorzugsweise in Sichthöhe des Bedienpersonals oberhalb der Standfläche angeordnet, so dass das Bedienpersonal bequem die dort dargestellten Bildinformationen sehen kann. Sind mehrere Standflächen vorgesehen, ist vorzugsweise jede Standfläche mit einem Anzeigegerät, etwa einem Bildschirm oder Display, ausgestattet.

Ist auf dem Anzeigegerät die Bildinformation der ersten Kamera dargestellt, so hat die Bedienperson gewissermaßen die Perspektive des Fahrers. Vorzugsweise ist die erste Kamera so angeordnet, dass sie diese Perspektive weitestgehend wiedergibt. Das bedeutet, dass die Bedienperson das Verkehrsgeschehen vor dem Nutzfahrzeug wahrnehmen kann und darauf reagieren kann. Beispielsweise kann man sich auf die zu erwartende Fahrdynamik - Bremsen, Ausweichmanöver etc. - einstellen und wird davon nicht überrascht.

Ist auf dem Anzeigegerät die Bildinformation der zweiten Kamera dargestellt, verfügt das Bedienpersonal gewissermaßen über eine Rückspiegelfunktion. Das Bedienpersonal kann also vor dem Verlassen der Standfläche des Geschehen in seinem Rücken überprüfen und eventuell zu nah auffahrenden oder sogar überholenden Verkehrsteilnehmern ausweichen.

Die Bildinformation der Kameras kann auch mit Unterstützung einer Künstlichen Intelligenz ausgewertet werden, um das Bedienpersonal dabei zu unterstützen, relevante oder kritische Informationen zu erkennen. Diese können optisch markiert und/oder mit konkreten Warnhinweisen und/oder Handlungsempfehlungen für das Bedienpersonal versehen werden. Optische Markierungen können beispielsweise Rahmen sein. Die optischen Markierungen können mit unterschiedlichen Farben codiert sein, um Gefahrenstufen oder Gefahrenarten abzubilden. Zu den relevanten oder kritischen Informationen gehören Fahrzeuge, Personen und Hindernisse. Insbesondere sich schnell nähernde Fahrzeuge oder Fahrzeuge, die in einen vorbestimmten Gefahrenbereich um das Nutzfahrzeug eindringen, stellen ein besonderes Gefahrenpotential dar.

Zusätzlich zu den Warnhinweisen und/oder Handlungsempfehlungen auf dem Bildschirm können akustische und optische Signale gegeben werden, beispielsweise kann der akustische Rückfahrwarner aktiviert werden oder die Arbeitsscheinwerfer werden mit einer hohen Frequenz aktiviert, um das Bedienpersonal auf die Gefahrensituation aufmerksam zu machen.

Die Darstellung wechselt abhängig vom Betriebsmodus des Nutzfahrzeugs, so dass dem Bedienpersonal automatisch die jeweils relevante Bildinformation dargestellt wird.

Damit wird die Sicherheit des Bedienpersonals stark verbessert, weil dieses einen besseren Überblick über das Verkehrsgeschehen rund um das Nutzfahrzeug erhält und entsprechend reagieren kann, um Unfälle zu vermeiden.

Insbesondere befindet sich die Standfläche in einem heckseitigen Bereich des Nutzfahrzeugs, insbesondere in einem für das Bedienpersonal auf der Standfläche sichteinschränkenden Bereich des Nutzfahrzeuges, insbesondere in einem die Sicht nach vorn einschränkenden Bereich des Nutzfahrzeugs. Die Erfindung hat dann besondere Vorteile, da sie den Sichtbereich des Bedienpersonals dann auf nicht oder schwer einsehbare Bereiche in der Umgebung des Nutzfahrzeugs erweitert.

Vorzugsweise sind im Fahrbetrieb Bildinformationen der ersten Kamera auf dem Anzeigegerät dargestellt. Unter Fahrbetrieb wird der Betriebsmodus verstanden, in dem sich das Nutzfahrzeug auf einer Überführungsfahrt oder auf einer längeren Strecke zwischen zwei Haltepunkten, beispielsweise Abfallbehältern, befindet. Dann wird üblicherweise mit einer höheren Geschwindigkeit gefahren. In diesem Betriebsmodus ist daher besonders das Verkehrsgeschehen vor dem Nutzfahrzeug relevant.

Besonders bevorzugt sind im Fahrbetrieb neben den Bildinformationen auch Informationen zum Fahrbetrieb, beispielsweise Geschwindigkeit, Bremsbetätigung oder Gaspedalposition, dargestellt. Diese Informationen verdeutlichen dem Bedienpersonal die jeweilige Fahrsituation. Die Personen laufen dann nicht Gefahr, die Fahrdynamik und Geschwindigkeit zu unterschätzen, und können leichter das kommende Geschehen abschätzen.

In einer weiteren Ausgestaltung der Erfindung können die Informationen zum Fahrbetrieb mit den Bewertungen der Bildinformationen durch Künstliche Intelligenz abgeglichen werden, und sobald die Informationen zum Fahrbetrieb nicht mehr adäquat für die Bewertung der Fahrsituation durch die Künstliche Intelligenz sind, kann dem Fahrer des Nutzfahrzeugs ein entsprechender akustischer und/oder optischer Hinweis gegeben werden.

Eine weitere vorteilhafte Ausgestaltung der Erfindung sieht vor, dass im Fahrbetrieb beim Unterschreiten einer vorbestimmten Geschwindigkeit Bildinformationen der zweiten Kamera auf dem Anzeigegerät dargestellt sind. Sobald das Nutzfahrzeug den nächsten Haltepunkt erreicht, beispielsweise den nächsten Standort eines Abfallbehälters, bereiten sich die Bedienpersonen auf das Absteigen von der Standfläche vor. Dann ist es vorteilhaft, wenn beim Unterschreiten einer vorbestimmten Geschwindigkeit die Darstellung auf dem Anzeigegerät automatisch wechselt, so dass das Personal sofort über das Geschehen in seinem Rücken informiert ist.

Aber nicht nur beim Anfahren an einen Haltepunkt ist das zweckmäßig. Auch beim Halt an einer Ampel oder beim Abbiegen kann es zu gefährlichen Situationen kommen, wenn andere Verkehrsteilnehmer zu dicht auffahren. Auch dann ist ein Überblick des heckseitigen Geschehens hilfreich für das Bedienpersonal und kann helfen Unfälle zu vermeiden.

Besonders bevorzugt beträgt die vorbestimmte Geschwindigkeit von 4 bis 8 Kilometer pro Stunde, bevorzugt von 5,5 bis 6,4 Kilometer pro Stunde.

Weiterhin bevorzugt ist eine dritte Kamera vorgesehen, die einen Laderaum des Nutzfahrzeugs erfasst und deren Bildinformation auf dem Anzeigegerät darstellbar ist. Unter einem Laderaum ist der Bereich des Nutzfahrzeuges zu verstehen, in den Gegenstände oder Material eingefüllt werden, um diese zu transportieren. Dabei kann es sich beispielsweise um Abfall oder Abfallsäcke im Fall von Abfallsammelfahrzeugen, oder um Schmutz und Unrat, der von einer Straßenkehrmaschine aufgesammelt wird, handeln. Um einen fortdauernden Betrieb zu gewährleisten ist es wichtig, den Füllstand des Laderaums, die Arbeit von eventuell vorhandenen Kompaktierungseinheiten oder das Entleerverhalten einer Schüttung regelmäßig zu kontrollieren. Der Laderaum ist schwer oder sogar gar nicht einzusehen und das Bedienpersonal muss sich im Bereich einer Schüttung oder der Einfüllöffnung aufhalten, um die Kontrolle auszuführen. Auch das sind sicherheitsrelevante Bereiche mit hoher Unfallgefahr.

Durch die Darstellung der Bildinformation auf dem Anzeigegerät kann eine Bedienperson bequem von der Standfläche aus einen Laderaum kontrollieren, ohne sich in sicherheitsrelevante Bereiche des Nutzfahrzeuges begeben zu müssen, was die Unfallgefahr ausschließt.

Bevorzugt ist in oder an dem Laderaum eine Beleuchtungseinrichtung angeordnet. Das hat den Vorteil, dass stets der Laderaum gut einsehbar ist, auch wenn es sich um einen ganz oder teilweise geschlossenen Laderaum handelt oder die Sichtverhältnisse allgemein schlecht sind.

Weiterhin bevorzugt sind im Arbeitsbetrieb Bildinformationen der dritten Kamera auf dem Anzeigegerät dargestellt. Unter Arbeitsbetrieb wird beispielsweise bei Abfallsammelfahrzeugen das Entleeren der Abfallbehälter oder bei Straßenkehrmaschinen der Betrieb von Bürsten, Düsen und Saugschacht zur Reinigung von Bodenflächen verstanden.

Die Bildinformation der dritten Kamera kann mit Unterstützung einer Künstlichen Intelligenz ausgewertet werden, um das Bedienpersonal dabei zu unterstützen, relevante oder kritische Informationen zu erkennen. Beispielsweise kann erkannt werden, ob ein Abfallbehälter vollständig, nur teilweise oder gar nicht entleert wurde, dann kann die Schüttung des Nutzfahrzeugs automatisch das Kippen das Abfallbehälters oder den gesamten Entleervorgang wiederholen, um den Abfallbehälter vollständig zu entleeren. Es kann beispielsweise auch erkannt werden, welche Art von Abfall oder Schmutz und Unrat gesammelt wurde, um unerwünschtes oder gefährliches Material zu identifizieren.

In einer weiteren vorteilhaften Ausführung der Erfindung ist vorgesehen, dass an Stelle der Bildinformationen oder gemeinsam mit den Bildinformationen statistische Informationen darstellbar sind. Dadurch wird der Arbeitsplatz des Bedienpersonals aufgewertet und fördert dessen Arbeitsbereitschaft. Neben Daten zur aktuellen Tätigkeit, können Daten zum Nutzfahrzeug und zur Umgebung dargestellt werden. Das kann dabei helfen, die Einstellungen des Nutzfahrzeuges zu verbessern oder in Abstimmung mit der Einsatzleitung zusätzliche Maßnahmen festzulegen. Insbesondere können statistische Informationen sein:
- Anzahl der geleerten Zweiradbehälter
- Anzahl der geleerten Vierradbehälter
- Länge der auf einer Fahrt zurückgelegten Strecke
- Außentemperatur
- Anzahl der Haltepunkte des Nutzfahrzeugs
- Betriebsstunden
- Umgebungsdaten
- Landkartendarstellung, vorzugsweise mit eingezeichneter Fahrtstrecke
- Füllstand des Laderaums oder eines Sammelcontainers

Dies Aufzählung ist nicht abgeschlossen, sondern kann durch weitere zweckmäßige statistische Informationen erweitert werden. Ebenso kann jede einzelne Information unabhängig von den anderen Informationen zur Darstellung ausgewählt werden. Die konkret dargestellte Information hängt auch von der Bestimmung des Nutzfahrzeuges ab.

In einer weiteren Ausführung der Erfindung ist vorgesehen, dass das Anzeigegerät nur aktiv ist, wenn die Standfläche besetzt ist. Bei längeren Überführungsfahren ist das Trittbrett nicht besetzt, das Bedienpersonal fährt dann in der Fahrerkabine mit. Üblicherweise werden diese Fahrten bei hohen Geschwindigkeiten - in der Regel mehr als 30 Kilometer pro Stunde - durchgeführt, so dass eine Besetzung des Trittbretts gar nicht zulässig ist. Dann ist auch der Betrieb des Anzeigegeräts nicht zweckmäßig und es kann inaktiv bleiben, wodurch Energie gespart wird.

Bevorzugt wird das Anzeigegerät aktiviert sobald die Standfläche besetzt wird oder bereits sobald die Standfläche in einen betretbaren Zustand gebracht wird, beispielsweise wenn ein Trittbrett in den betretbaren Zustand geklappt wird.

Alternativ zur Inaktivierung kann das Anzeigegerät auch als Werbefläche genutzt werden, in dem darauf ein Firmenlogo, ein Imagefilm oder dergleichen dargestellt wird.

Vorzugsweise ist die auf dem Anzeigegerät dargestellte Information durch das Bedienpersonal wählbar. Das Bedienpersonal ist dadurch in der Lage unabhängig von einer standardisierten Darstellung von Information, insbesondere unabhängig vom Betriebsmodus, die Information auf dem Anzeigegerät zu betrachten, die für die aktuelle Situation im Betrieb relevant ist. Das kann beinhalten, dass beispielsweise zwischen den Bildinformationen der Kameras gewechselt wird oder dass zwischen Bildinformationen und statistischen Informationen gewechselt wird oder dass unterschiedliche Arten von Informationen parallel nebeneinander auf dem Anzeigegerät dargestellt werden. Dies verbessert den Komfort für das Bedienpersonal sowie die Arbeitseffizienz.

Eine weitere Ausgestaltung der Erfindung sieht vor, dass als Bildinformation auch eine Umgebungsdarstellung des Nutzfahrzeugs auf dem Anzeigegerät darstellbar ist. Diese Umgebungsdarstellung kann beispielsweise als Vogelperspektive ausgeführt sein. Die Umgebungsdarstellung bietet dem Bedienpersonal einen schnellen Überblick über die Situation rund um das Nutzfahrzeug. Zur Erstellung der Umgebungsdarstellung können die Bildinformationen der ersten und zweiten Kamera verwendet werden. Es können zusätzliche Kameras vorgesehen sein, um die Informationen der ersten und zweiten Kamera zu ergänzen. Es können auch ausschließlich zusätzliche Kameras vorgesehen sein, um die Bildinformationen für die Umgebungsdarstellung zu liefern.

Die Bildinformation der Kameras kann mit Unterstützung einer Künstlichen Intelligenz ausgewertet werden, wobei diese ebenfalls optisch markiert und/oder mit konkreten Warnhinweisen und/oder Handlungsempfehlungen für das Bedienpersonal versehen werden wie vorstehend bereits beschrieben.

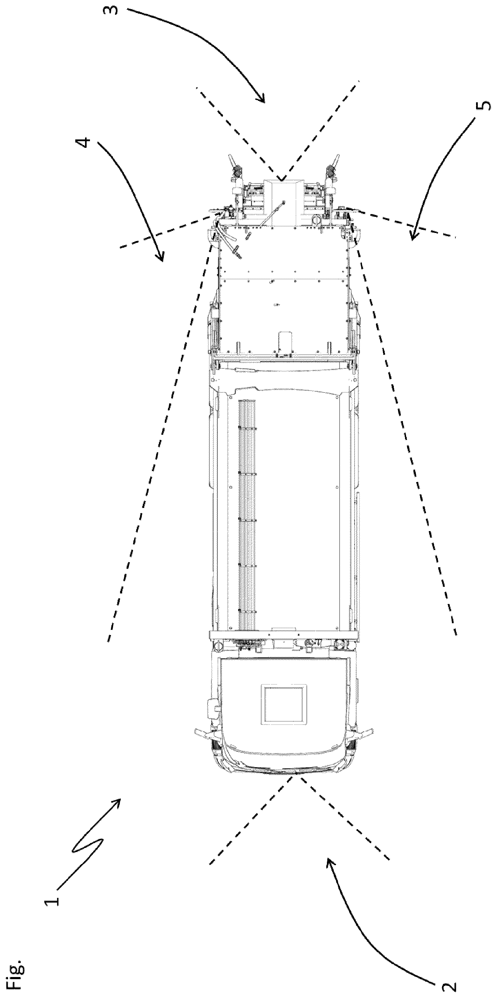

Die einzige Figur zeigt als Ausführungsbeispiel der Erfindung ein Abfallsammelfahrzeug 1 in der Draufsicht.

Das Abfallsammelfahrzeug 1 verfügt über eine erste Kamera, die einen Bereich in Fahrtrichtung 2 vor dem Fahrzeug erfasst. Die Kamera bildet dabei im Wesentlichen die Perspektive des Fahrers ab und erfasst das Verkehrsgeschehen in Fahrtrichtung.

Außerdem verfügt das Abfallsammelfahrzeug 1 über eine zweiten Kamera, die einen Bereich in Fahrtrichtung hinter dem Fahrzeug 3 erfasst. Hier wird das Verkehrsgeschehen hinter dem Abfallsammelfahrzeug 1 aufgenommen.

Im Sichtfeld des Bedienpersonals ist oberhalb der Trittbretter des Abfallsammelfahrzeugs 1 jeweils ein Anzeigegerät angeordnet, auf dem abhängig von dem Betriebsmodus des Abfallsammelfahrzeugs 1 Bildinformationen zumindest einer Kamera darstellbar sind.

Das Bedienpersonal steht normalerweise auf den Trittbrettern mit Blickrichtung nach vorne und hat dabei ein sehr eingeschränktes Blickfeld 4,5. Das Geschehen in der weiteren Umgebung des Abfallsammelfahrzeugs 1 ist nicht oder nur schwer wahrnehmbar. Durch die Darstellung der Bildinformationen der Kameras gewinnt das Bedienpersonal besseren Überblick über das Verkehrsgeschehen und kann sich auf Fahrsituationen besser einstellen. Damit wird die Unfallgefahr verringert und die Sicherheit des Bedienpersonals verbessert.

### Bezugszeichen

- 1: Abfallsammelfahrzeug
- 2: Aufnahmebereich der ersten Kamera
- 3: Aufnahmebereich der zweiten Kamera
- 4: Blickfeld Bedienpersonal
- 5: Blickfeld Bedienpersonal

## Patentansprüche

1. Nutzfahrzeug (1) mit zumindest einer Standfläche für mitfahrendes Bedienpersonal, mit einer ersten Kamera, die einen Bereich (2) in Fahrtrichtung vor dem Fahrzeug erfasst, und mit einer zweiten Kamera, die einen Bereich (3) in Fahrtrichtung hinter dem Fahrzeug (1) erfasst
**dadurch gekennzeichnet, dass** im Bereich der Standfläche zumindest ein Anzeigegerät angeordnet ist, auf dem abhängig von dem Betriebsmodus des Nutzfahrzeugs (1) Bildinformationen zumindest einer Kamera darstellbar sind.

2. Nutzfahrzeug (1) nach einem der vorstehenden Ansprüche **dadurch gekennzeichnet, dass** sich die Standfläche in einem heckseitigen Bereich des Nutzfahrzeugs (1) befindet, insbesondere in einem für das Bedienpersonal auf der Standfläche sichteinschränkenden Bereich des Nutzfahrzeugs (1), insbesondere in einem die Sicht nach vorn einschränkenden Bereich des Nutzfahrzeugs (1).

3. Nutzfahrzeug (1) nach Anspruch 1 **dadurch gekennzeichnet, dass** im Fahrbetrieb Bildinformationen der ersten Kamera auf dem Anzeigegerät dargestellt sind.

4. Nutzfahrzeug (1) nach Anspruch 2 **dadurch gekennzeichnet, dass** im Fahrbetrieb neben den Bildinformationen auch Informationen zum Fahrbetrieb, beispielsweise Geschwindigkeit, Bremsbetätigung oder Gaspedalposition, dargestellt sind.

5. Nutzfahrzeug (1) nach Anspruch 1 oder 2 **dadurch gekennzeichnet, dass** im Fahrbetrieb beim Unterschreiten einer vorbestimmten Geschwindigkeit Bildinformationen der zweiten Kamera auf dem Anzeigegerät dargestellt sind.

6. Nutzfahrzeug (1) nach Anspruch 3 **dadurch gekennzeichnet, dass** die vorbestimmte Geschwindigkeit von 4 bis 8 Kilometer pro Stunde, bevorzugt von 5,5 bis 6,4 Kilometer pro Stunde, beträgt.

7. Nutzfahrzeug (1) nach einem der vorstehenden Ansprüche **dadurch gekennzeichnet, dass** eine dritte Kamera vorgesehen ist, die einen Laderaum des Nutzfahrzeugs (1) erfasst und deren Bildinformation auf dem Anzeigegerät darstellbar ist.

8. Nutzfahrzeug (1) nach Anspruch 5 **dadurch gekennzeichnet, dass** in oder an dem Laderaum eine Beleuchtungseinrichtung angeordnet ist.

9. Nutzfahrzeug (1) nach Anspruch 5 oder 6 **dadurch gekennzeichnet, dass** im Arbeitsbetrieb Bildinformationen der dritten Kamera auf dem Anzeigegerät dargestellt sind.

10. Nutzfahrzeug (1) nach einem der vorstehenden Ansprüche **dadurch gekennzeichnet, dass** an Stelle der Bildinformationen oder gemeinsam mit den Bildinformationen statistische Informationen darstellbar sind.

11. Nutzfahrzeug (1) nach Anspruch 8 **dadurch gekennzeichnet, dass** statistische Informationen sein können:
• Anzahl der geleerten Zweiradbehälter
• Anzahl der geleerten Vierradbehälter
• Länge der auf einer Fahrt zurückgelegten Strecke
• Außentemperatur
• Anzahl der Haltepunkte des Nutzfahrzeugs (1)
• Betriebsstunden
• Umgebungsdaten
• Landkartendarstellung, vorzugsweise mit eingezeichneter Fahrtstrecke
• Füllstand des Laderaums oder eines Sammelcontainers

12. Nutzfahrzeug (1) nach einem der vorstehenden Ansprüche **dadurch gekennzeichnet, dass** das Anzeigegerät nur aktiv ist, wenn die Standfläche besetzt ist.

13. Nutzfahrzeug (1) nach einem der vorstehenden Ansprüche **dadurch gekennzeichnet, dass** die auf dem Anzeigegerät dargestellte Information durch das Bedienpersonal wählbar ist.

14. Nutzfahrzeug (1) nach einem der vorstehenden Ansprüche **dadurch gekennzeichnet, dass** als Bildinformation auch eine Umgebungsdarstellung des Nutzfahrzeugs (1) auf dem Anzeigegerät darstellbar ist.
